# EUROPÄISCHE PATENTSCHRIFT

(11) **EP 0 643 287 B1**
(45) Veröffentlichungstag und Bekanntmachung des Hinweises auf die Patenterteilung: **04.03.1998**
(21) Anmeldenummer: 94114359.6
(22) Anmeldetag: 13.09.1994
(51) Int. Cl.: G01G 19/02, G01G 3/14

(54) **Flache Waage, insbesondere Radlastwaage**
Flat balance, especially wheel load measuring device
Balance plate, en particulier balance pour mesurer la charge d'une roue

(30) Priorität: 14.09.1993 DE 4331149
(43) Veröffentlichungstag der Anmeldung: 15.03.1995
(73) Patentinhaber: GTM GASSMANN THEISS MESSTECHNIK GMBH, D-64334 Seeheim-Jugenheim (DE)
(72) Erfinder: Müller, Klaus, D-65468 Trebur (DE); Gassmann, Helmut Dr., D-64334 Seeheim-Jugenheim (DE)
(74) Vertreter: Katscher, Helmut, Dipl.-Ing.

(56) Entgegenhaltungen:
- DE-A- 3 632 011
- DE-B- 1 144 507
- DE-B- 1 260 194
- DE-C- 3 937 318
- GB-A- 739 278

## Beschreibung

Die Erfindung betrifft eine flache Waage, insbesondere eine Radlastwaage für die Räder von Straßenfahrzeugen und Flugzeugen, mit einer die Last aufnehmenden flachen Wägeplatte, die an ihrem Rand über mit Dehnungsmeßstreifen bestückte Verformungselemente an einem Waageunterteil abgestützt ist.

Flache Waagen werden für zahlreiche Anwendungen eingesetzt, beispielsweise als Tischwaagen, Abfüllwaagen oder Containerwaagen oder in anderen Bereichen, bei denen eine flache Bauweise von besonderem Vorteil ist. Ein wichtiger und deshalb hier bevorzugt beschriebener Einsatzbereich liegt bei Radlastwaagen. Radlastwaagen dienen zur Bestimmung der Radlast von Straßenfahrzeugen oder Flugzeugen, wobei die Radlastwaage jeweils unter dem Rad angeordnet wird, dessen Radlast bestimmt werden soll.

Aus den Wägeergebnissen der einzelnen Fahrzeugräder kann dann die Fahrzeuglast ermittelt werden. Durch das Anheben des jeweils zu verwiegenden Rades gegenüber den übrigen, auf der Straßenoberfläche stehenden Rädern entsteht ein Meßfehler, der umso größer ist, je höher das Rad angehoben werden muß. Bei Radlastwaagen, die eine Bauhöhe von beispielsweise mehr als 30 mm haben, müssen deshalb die übrigen Räder aufgekeilt werden. Dies ist mit verhältnismäßig hohem Aufwand verbunden. Radlastwaagen, deren Bauhöhe so gering ist, daß ohne Beeinträchtigung der Wägegenauigkeit auf ein Aufkeilen der übrigen Räder verzichtet werden kann, haben infolge ihrer Bauweise eine für viele Anwendungsfälle unzureichende Wägegenauigkeit.

Bei einer bekannten Radlastwaage der eingangs genannten Gattung (DE-A 33 40 355) ist die flache, rechteckige Wägeplatte an zwei gegenüberliegenden Rändern mit verformbaren Stegen versehen, die mit Dehnungsmeßstreifen bestückt sind. Im Gegensatz zu bekannten Radlastwaagen, bei denen die Durchbiegung der Wägeplatte erfaßt wird, wird bei dieser bekannten Radlastwaage in erster Linie die Scherbeanspruchung der Wägeplatte und die daraus resultierende Verformung der Stege erfaßt. Die durch die unvermeidbare Durchbiegung der Wägeplatte an deren Rand auftretenden Verformungen in horizontaler Richtung führen jedoch zu einer Beeinflussung des Meßergebnisses.

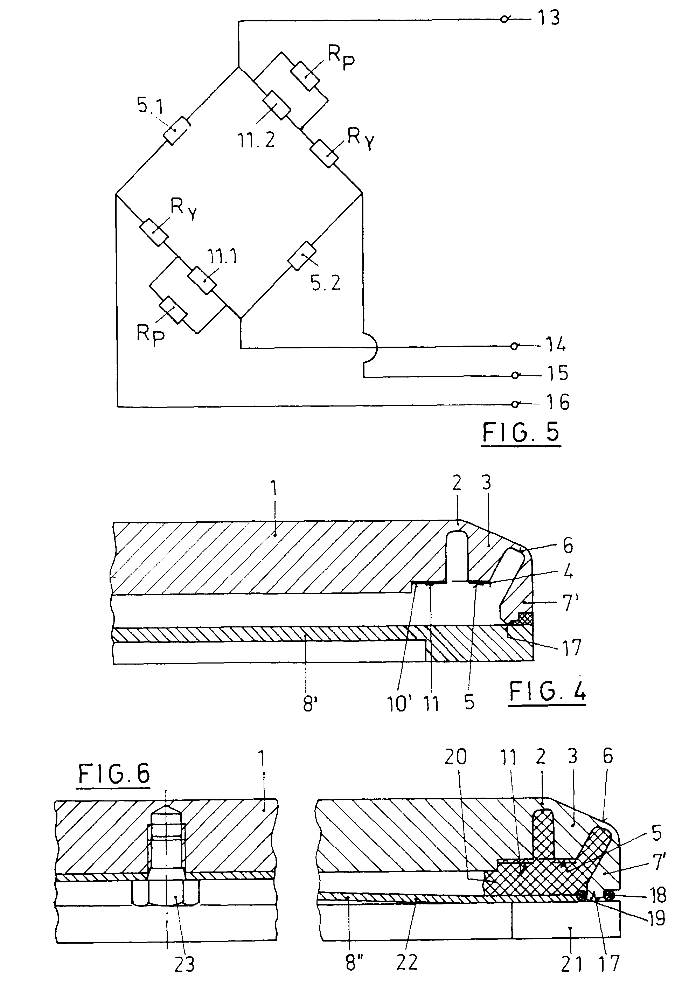

Weiterhin ist aus Figur 5 der DE-Cl-3 937 318 eine Kraftmeßvorrichtung mit zwei Verformungszeigen bekannt.

Aufgabe der Erfindung ist es, eine flache Waage, insbesondere eine Radlastwaage, der eingangs genannten Gattung so auszubilden, daß die Wägegenauigkeit wesentlich erhöht und eine einfache Herstellung ermöglicht wird.

Diese Aufgabe wird erfindungsgemäß dadurch gelöst, daß die Wägeplatte die Form einer Kreisscheibe hat, daß die Wägeplatte an ihrem Umfang über ein inneres kreisförmiges Biegegelenk mit einem konzentrischen Biegering verbunden ist, der sich über ein äußeres kreisförmiges Biegegelenk am Rand des scheibenförmigen Waageunterteils abstützt, daß an der Unterseite des Biegerings und an der Unterseite der Wägeplatte jeweils über den Umfang verteilt mindestens zwei Dehnungsmeßstreifen angebracht sind, und daß die Dehnungsmeßstreifen in einer Vollbrückenschaltung gegeneinandergeschaltet sind.

Die Verwendung von zwei sich jeweils über den Umfang erstreckenden Dehnungsmeßstreifen und deren Zusammenschaltung in einer Vollbrückenschaltung ermöglicht es, die sich aus der Biegeverformung der Wägeplatte ergebenden Einflüsse vollständig zu kompensieren. Dabei wird der Vorteil der Verwendung eines konzentrischen Biegerings als Verformungselement ausgenutzt, obwohl die bei derartigen, an sich bekannten Biegeringen üblicherweise erforderliche Bauhöhe, bedingt durch die Anordnung des zweiten Dehnungsmeßstreifens am Biegering, hier nicht zur Verfügung steht. Überraschenderweise hat sich ergeben, daß die Anbringung des zweiten, zur Kompensation der Biegeeinflüsse dienenden Dehnungsmeßstreifens an der Unterseite der Wägeplatte ausreicht, wodurch sich eine sehr flache Bauweise ergibt. Damit wird eine Wägegenauigkeit von 0,2 % erzielt, wobei ein durch außermittigen Lastangriff erzeugter Fehler nur etwa 0,035 % beträgt.

Die rotationssymmetrische, konzentrische Ausführung aller Teile der Waage ermöglicht eine einfache und genaue Herstellung durch Drehen. Die erfindungsgemäße flache Waage kann mit einer sehr geringen Bauhöhe von etwa 20 mm ausgeführt werden.

Rotationssymmetrische, durch Drehen hergestellte Biegeringe sind zwar als Verformungselemente von Wägezellen bekannt (DE-B- 37 14 613). Jedoch ist dort bei vergleichbaren Laststufen eine Bauhöhe erforderlich, die wesentlich über der für flache Radlastwaagen zulässigen Bauhöhe liegt, weil die beiden Dehnungsmeßstreifen üblicherweise an der Unterseite und an der Oberseite des Biegerings angebracht werden.

Gemäß einer Ausführungsform der Erfindung ist vorgesehen, daß der Dehnungsmeßstreifen an der Unterseite der Wägeplatte in der Nähe der Ebene der neutralen Faser angebracht ist. Die an der Wägeplatte und am Biegering angebrachten Dehnungsmeßstreifen liegen dabei auf unterschiedlicher Höhe, zumal angestrebt wird, den Biegering mit möglichst großer Höhe auszuführen, um ein möglichst großes Meßsignal zu erreichen. Dabei können die Dehnungsmeßstreifen so angeordnet werden, daß sich Ihre aus der Durchbiegung der Wägeplatte ergebenden Fehlersignale in der Brückenschaltung kompensieren.

Gemäß einer bevorzugten Ausführungsform der Erfindung ist vorgesehen, daß die Wägeplatte an ihrem Umfang eine in der Ebene der neutralen Faser liegende, nach unten gerichtete Kreisringfläche aufweist, die den einen Dehnungsmeßstreifen trägt. Damit wird erreicht, daß die die beiden Dehnungsmeßstreifen tragenden Flächen, nämlich die Unterseite des Biegerings und die Fläche am Umfang der Wägeplatte sehr ähnlich ausgeführt sind. Es handelt sich in beiden Fällen um Kreisringflächen von nahezu gleichem Durchmesser, die parallel zur Ebene der Wägeplatte angeordnet sind. Durch das Zusammenschalten dieser beiden Dehnungsmeßstreifen in einer Vollbrückenschaltung wird neben der Kompensation der Biegeeinflüsse auch eine Kompensation der Temperatureinflüsse erreicht.

Als besonders vorteilhaft hat sich eine Ausführungsform erwiesen, bei der die Dehnungsmeßstreifen aus spiralförmig um den gesamten Umfang gewickelten Dehnungsmeßdrähten bestehen. Hierbei wird die gesamte Umfangsdehnung des Biegerings erfaßt, um das lastabhängige Meßsignal zu gewinnen.

Gemäß einer anderen Ausführungsform der Erfindung ist vorgesehen, daß die Wägeplatte an ihrem Umfang eine auf gleicher Höhe wie die Unterseite des Biegerings liegende, nach unten gerichtete Kreisringfläche aufweist, die den einen Dehnungsmeßstreifen trägt. Da hierbei die beiden Applikationsflächen für die Dehnungsmeßstreifen auf gleicher Höhe liegen, kann eine Dehnungsmeßspirale verwendet werden, die alle vier benötigten Widerstände besitzt. Der Aufwand für die Herstellung und Applikation ist dadurch verringert. Da beide Dehnungsmeßspiralen auf gleicher Höhe liegen, erzeugt die innere Dehnungsmeßspirale ein größeres Signal, das in der Brückenschaltung zu einer Überkompensation der Durchbiegung der Wägeplatte führt. Dies kann durch eine abweichende Gewichtung der inneren Dehnungsmeßspirale in der Brückenschaltung beseitigt werden.

Weitere vorteilhafte Ausgestaltungen des Erfindungsgedankens sind Gegenstand weiterer abhängiger Ansprüche.

Die Erfindung wird nachfolgend an einem Ausführungsbeispiel näher erläutert, das in der Zeichnung dargestellt ist. Es zeigt:
Fig. 1 in räumlicher Darstellungsweise und teilweise aufgeschnitten eine flache Radlastwaage,
Fig. 2 einen vergrößerten Teilschnitt längs der Linie II-II in Fig. 1,
Fig. 3 ein vereinfachtes Schaltbild der Radlastwaage,
Fig. 4 in einem Teilschnitt ähnlich der Fig. 2 eine abgewandelte Ausführungsform einer Radlastwaage,
Fig. 5 ein vereinfachtes Schaltbild der Radlastwaage nach Fig. 4 und
Fig. 6 in einem Teilschnitt ähnlich der Fig. 4 eine weitere, abgewandelte Ausführungsform.

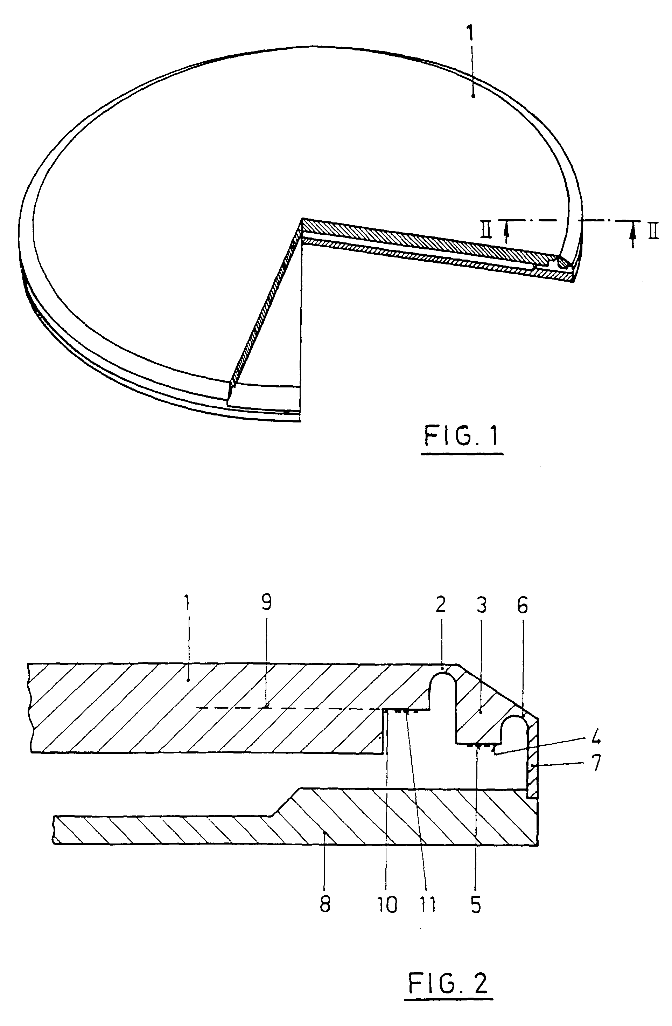

Die in den Fig. 1 und 2 dargestellte Radlastwaage dient zur Bestimmung der Radlasten der Räder von Straßenfahrzeugen und weist eine die Radlast aufnehmende flache Wägeplatte 1 in Form einer Kreisscheibe auf. An ihrem Umfang ist die Wägeplatte 1 über ein inneres, kreisförmiges Biegegelenk 2, das an der Oberseite der Wägeplatte 1 liegt, mit einem konzentrisch am Umfang der Wägeplatte angeordneten Biegering 3 verbunden.

Der Biegering 3 trägt an seiner kreisringförmigen Unterseite 4 einen ersten Dehnungsmeßstreifen 5. An seinem äußeren Umfang stützt sich der Biegering 3 über ein äußeres kreisförmiges Biegegelenk 6 und einen zylindrischen, sich nach unten erstreckenden Stützring 7 am Umfang eines Waageunterteils 8 ab, das als Kreisscheibe ausgeführt ist. Das äußere Biegegelenk 6 liegt im Abstand oberhalb der den Dehnungsmeßstreifen 5 tragenden Unterseite 4 des Biegerings 3.

Die Wägeplatte 1, das innere Biegegelenk 2, der Biegering 3, das äußere Biegegelenk 7 und der bis zum Umfang des Waageunterteils 8 reichende Stützring 7 sind einstückig ausgeführt und durch eine Drehbearbeitung einer kreisrunden Stahlplatte hergestellt. Der Stützring 7 ist mit dem Waageunterteil 8 durch eine einzige, umlaufende Schweißnaht dicht verbunden, die beispielsweise mittels Laserschweißung hergestellt ist. Auf diese Weise bilden die Wägeplatte 1, das innere Biegegelenk 2, der Biegering 3, das äußere Biegegelenk 6 und der Stützring 7 zusammen mit dem scheibenförmigen Waageunterteil 8 eine hermetisch geschlossene flache Dose.

In der Ebene der neutralen Faser 9 der Wägeplatte 1, die in Fig. 2 mit einer gestrichelten Linie angedeutet ist, ist am Umfang der Wägeplatte 1 eine nach unten gerichtete Kreisringfläche 10 vorgesehen, die von einer Umfangsstufe gebildet wird. Diese Kreisringfläche 10 trägt einen zweiten Dehnungsmeßstreifen 11, der sich ebenfalls über den Umfang erstreckt. Die neutrale Faser 9 liegt bei einer ebenen, gleichmäßig dicken Kreisplatte angenähert in der Mitte zwischen deren Oberseite und deren Unterseite.

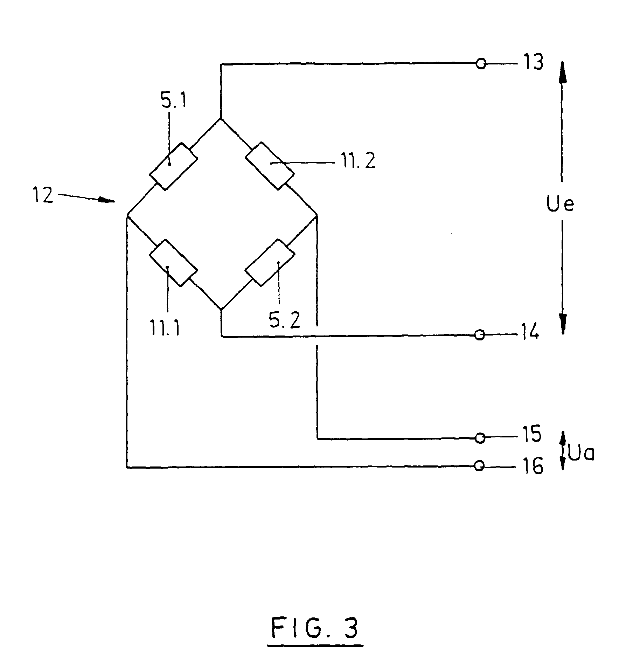

Die beiden Dehnungsmeßstreifen 5 und 11 bestehen jeweils aus zwei Dehnungsmeßstreifenabschnitten 5.1, 5.2 bzw. 11.1, 11.2, die - wie in Fig. 3 gezeigt - jeweils in gegenüberliegenden Zweigen der Brückenschaltung angeordnet sind. Bei dem dargestellten Ausführungsbeispiel werden die einzelnen Dehnungsmeßstreifenabschnitte jeweils von einem spiralförmig um den gesamten Umfang gewickelten Dehnungsmeßdraht gebildet.

In der in Fig. 3 dargestellten Vollbrückenschaltung 12 sind die beiden Dehnungsmeßstreifen 5 (bestehend aus den Abschnitten 5.1 und 5.2) und 11 (bestehend aus den Abschnitten 11.1 und 11.2) in der Weise gegeneinandergeschaltet, daß eine Kompensation der durch die Durchbiegung der Wägeplatte 1 auftretenden Fehlereinflüsse erfolgt. Wenn zwischen den Eingängen 13 und 14 der Brückenschaltung 12 eine Eingangsspannung Ue angelegt wird, liefert eine zwischen den Ausgängen 15 und 16 abgegriffene Ausgangsspannung Ua nach Verstärkung in einer (nicht dargestellten) Auswerteschaltung ein der aufgebrachten Radlast proportionales Meßsignal. Der Dehnungsmeßstreifen 5 stellt dabei den aktiven Dehnungsmeßstreifen dar, der ein der aufgebrachten Radlast entsprechendes Meßsignal liefert, das aber noch mit einem durch die Durchbiegung der Wägeplatte 1 verursachten Fehler behaftet ist. Dieser Fehler und ein etwaiger Temperaturfehler werden durch das vom passiven Dehnungsmeßstreifen 11 gelieferten Kompensationssignal kompensiert.

Abweichend von dem vorher beschriebenen Ausführungsbeispiel sind bei der Ausführungsform nach Fig. 4 die jeweils als Dehnungsmeßspiralen ausgeführten Dehnungsmeßstreifenpaare 5 und 11 auf gleicher Höhe angeordnet und können daher in einem einzigen Arbeitsaufwand appliziert werden. Die Wägeplatte 1 weist an ihrem Umfang eine auf gleicher Höhe wie die Unterseite 4 des Biegerings 3 liegende, nach unten gerichtete Kreisringfläche 10' auf, die den einen Dehnungsmeßstreifen 11 trägt, der aus den Teilen 11.1 und 11.2 besteht.

Da der innere Dehnungsmeßstreifen 11 in Abhängigkeit von der Durchbiegung der Wägeplatte 1 ein größeres Fehlersignal erzeugt als der äußere Dehnungsmeßstreifen 5, das zu einer Überkompensation der Plattendurchbiegung in der Brückenschaltung führen würde, wird den beiden Teilen 11.1 und 11.2 des inneren Dehnungsmeßstreifens 11 jeweils ein Widerstand Rₚ parallelgeschaltet (Fig. 5). Zur Ausgleichung des Gesamtwiderstandes wird dem Dehnungsmeßstreifen 11.1 bzw. 11.2 ein Widerstand Rᵣ in Reihe vorgeschaltet.

Bei den Ausführungsbeispielen nach den Fig. 4 und 6 ist das äußere Biegegelenk 6 jeweils über einen Stützring 7' mit einer umlaufenden Schneide 17 am Rand des Waageunterteils 8' bzw. 8'' abgestützt. Dadurch wird erreicht, daß Unebenheiten des Untergrundes weitgehend ohne Einfluß auf das Meßergebnis bleiben. Vorzugsweise wird die Schneide 17 so angeordnet, daß bei Belastung der Waage keine Kräfte in radialer Richtung entstehen. Die Schneide 17 liegt angenähert auf dem gleichen Durchmesser wie das äußere Biegegelenk 6.

Beim Beispiel nach Fig. 4 ist der Stützring 7' mittels eines elastischen Dichtrings 18, der außerhalb der Schneide 17 am äußeren Umfang angeordnet ist, gegenüber dem Waageunterteil 8' abgedichtet.

Beim Ausführungsbeispiel nach Fig. 6 ist zusätzlich zu diesem äußeren Dichtring 18 innerhalb der Schneide 17 ein weiterer elastischer Dichtring 19 vorgesehen. Die Dichtringe 18, 19 sind beispielsweise O-Ringe. Zusätzlich ist der die Dehnungsmeßstreifen 5 und 11 aufnehmende Bereich mit einer Füllung 20 von Silikonfett abgedichtet.

Bei der in Fig. 6 dargestellten Ausführungsform besteht das Waageunterteil 8'' aus einem den Rand bildenden Ring 21, mit dem sich die Waage am Boden abstützt, und einer dünnwandigen Mittelplatte 22, die in ihrer Mitte mit der Wägeplatte 1 verbunden ist, beispielsweise durch eine zentrale Schraube 23. Statt dessen ist auch eine andere Verbindungsart möglich, beispielsweise durch Kleben oder Schweißen. Die nach Art einer Membran dünnwandig ausgeführte Mittelplatte 22 ist in senkrechter Richtung so leicht verformbar, daß sie keinen Kraftnebenschluß für die Waage darstellt.

Die Dehnungsmeßstreifen 5, 11 können durch ein Meßkabel mit der Auswerteschaltung und einem üblichen Anzeigegerät verbunden werden. Stattdessen ist auch eine drahtlose Datenübertragung zum Auswertegerät möglich.

In entsprechender Weise können flache Waagen für andere Einsatzbereiche ausgeführt werden, beispielsweise Tischwaagen, Abfüllwaagen, Containerwaagen oder Flugzeugwaagen.

## Patentansprüche

1. Flache Waage, insbesondere Radlastwaage für die Räder von Straßenfahrzeugen, mit einer die Last aufnehmenden flachen Wägeplatte (1), die an ihrem Rand über mit Dehnungsmeßstreifen (5, 11) bestückte Verformungselemente an einem Waageunterteil abgestützt ist, dadurch gekennzeichnet, daß die Wägeplatte (1) die Form einer Kreisscheibe hat, daß die Wägeplatte (1) an ihrem Umfang über ein inneres kreisförmiges Biegegelenk (2) mit einem konzentrischen Biegering (3) verbunden ist, der sich über ein äußeres kreisförmiges Biegegelenk (6) am Rand des scheibenförmigen Wageunterteils (8, 8', 8'') abstützt, daß an der Unterseite (4) des Biegerings (3) und an der Unterseite der Wägeplatte (1) jeweils über den Umfang verteilt mindestens zwei Dehnungsmeßstreifen (5 bzw. 11) angebracht sind, und daß die Dehnungsmeßstreifen (5, 11) in einer Vollbrückenschaltung (12) gegeneinandergeschaltet sind.

2. Flache Waage nach Anspruch 1, dadurch gekennzeichnet, daß der Dehnungsmeßstreifen (11) an der Unterseite der Wägeplatte (1) in der Nähe der Ebene der neutralen Faser (9) angebracht ist.

3. Flache Waage nach Anspruch 2, dadurch gekennzeichnet, daß die Wägeplatte (1) an ihrem Umfang eine in der Nähe der Ebene der neutralen Faser (9) liegende, nach unten gerichtete Kreisringfläche (10) aufweist, die den einen Dehnungsmeßstreifen (11) trägt.

4. Flache Waage nach Anspruch 1, dadurch gekennzeichnet, daß die Wägeplatte (1) an ihrem Umfang eine auf gleicher Höhe wie die Unterseite (4) des Biegerings (3) liegende, nach unten gerichtete Kreisringfläche (10') aufweist, die den einen Dehnungsmeßstreifen (11) trägt.

5. Flache Waage nach Anspruch 1, dadurch gekennzeichnet, daß die Dehnungsmeßstreifen (5, 11) aus spiralförmig um den gesamten Umfang gewickelten Dehnungsmeßdrähten bestehen.

6. Flache Waage nach Anspruch 1, dadurch gekennzeichnet, daß das innere Biegegelenk (2) an der Oberseite der Wägeplatte (1) liegt.

7. Flache Waage nach Anspruch 1, dadurch gekennzeichnet, daß das äußere Biegegelenk (6) im Abstand oberhalb der den Dehnungsmeßstreifen (5) tragenden Unterseite (4) des Biegerings (3) liegt.

8. Flache Waage nach Anspruch 1, dadurch gekennzeichnet, daß die Wägeplatte (1) das innere Biegegelenk (2), der Biegering (3), das äußere Biegegelenk (6) und ein bis zum Umfang des Waageunterteils (8, 8', 8'') reichender Stützring (7, 7') einstückig ausgeführt sind.

9. Flache Waage nach Anspruch 1, dadurch gekennzeichnet, daß die Wägeplatte (1), das innere Biegegelenk (2), der Biegering (3), das äußere Biegegelenk (6) und ein bis zum Umfang des Waageunterteils (8, 8', 8'') reichender Stützring (7, 7') zusammen mit dem scheibenförmigen Waageunterteil (8, 8', 8'') eine hermetisch geschlossene flache Dose bilden.

10. Flache Waage nach Anspruch 1, dadurch gekennzeichnet, daß das äußere Biegegelenk (6) über einen Stützring (7') mit einer umlaufenden Schneide (17) am Rand des Waageunterteils (8', 8'') abgestützt ist.

11. Flache Waage nach Anspruch 10, dadurch gekennzeichnet, daß die umlaufende Schneide (17) angenähert auf dem gleichen Durchmesser liegt wie das äußere Biegelenk (6).

12. Flache Waage nach Anspruch 10, dadurch gekennzeichnet, daß der Stützring (7') mittels mindestens eines elastischen Dichtrings (18, 19) gegenüber dem Waageunterteil (8', 8'') abgedichtet ist.

13. Flache Waage nach einem der Ansprüche 1 - 12, dadurch gekennzeichnet, daß das Waageunterteil (8'') aus einem den Rand bildenden Ring (21) und einer dünnwandigen Mittelplatte (22) besteht, die in ihrer Mitte mit der Wägeplatte (1) verbunden ist.

## Revendications

1. Balance plate, en particulier balance de mesure de la charge des roues de véhicules routiers, comportant une plaque de pesée plate (1) recevant la charge, qui est appuyée, par son bord, sur une partie inférieure de la balance via des éléments de déformation munis de jauges extensométriques (5, 11), caractérisée en ce que la plaque de pesée (1) a la forme d'un plateau circulaire, en ce que la plaque de pesée (1) est raccordée sur sa périphérie, via une articulation de flexion interne (2) de forme circulaire, à un anneau de flexion (3) concentrique qui s'appuie, via une articulation de flexion externe (6) de forme circulaire, sur le bord de la partie inférieure (8, 8', 8") en forme de disque de la balance, en ce qu'au moins deux jauges extensométriques (5 ou 11) sont montées sur la partie inférieure (4) de l'anneau de flexion (3) et sur la partie inférieure de la plaque de pesée (1), respectivement réparties sur la périphérie, et en ce que les jauges extensométriques (5, 11) sont connectées en opposition dans un circuit de pont intégral (12).

2. Balance plate selon la revendication 1, caractérisée en ce que la jauge extensométrique (11) est montée sur la partie inférieure de la plaque de pesée (1) au voisinage du plan de la fibre neutre (9).

3. Balance plate selon la revendication 2, caractérisée en ce que la plaque de pesée (1) présente, sur sa périphérie, une surface d'anneau circulaire (10) dirigée vers le bas et disposée au voisinage du plan de la fibre neutre (9), qui porte la première jauge extensométrique (11).

4. Balance plate selon la revendication 1, caractérisée en ce que la plaque de pesée (1) présente, sur sa périphérie, une surface d'anneau circulaire (10') dirigée vers le bas et disposée à la même hauteur que la partie inférieure (4) de l'anneau de flexion (3), qui porte la première jauge extensométrique (11).

5. Balance plate selon la revendication 1, caractérisée en ce que les jauges extensométriques (5, 11) sont constituées de fils extensométriques enroulés en spirale sur toute la périphérie.

6. Balance plate selon la revendication 1, caractérisée en ce que l'articulation de flexion interne (2) est située sur la partie supérieure de la plaque de pesée (1).

7. Balance plate selon la revendication 1, caractérisée en ce que l'articulation de flexion externe (6) est située à une certaine distance au-dessus de la partie inférieure (4), portant la jauge extensométrique (5), de l'anneau de flexion (3).

8. Balance plate selon la revendication 1, caractérisée en ce que la plaque de pesée (1), l'articulation de flexion interne (2), l'anneau de flexion (3), l'articulation de flexion externe (6) et un anneau d'appui (7, 7') s'étendant jusqu'à la périphérie de la partie inférieure (8, 8', 8") de la balance sont formés d'une seule pièce.

9. Balance plate selon la revendication 1, caractérisée en ce que la plaque de pesée (1), l'articulation de flexion interne (2), l'anneau de flexion (3), l'articulation de flexion externe (6) et un anneau d'appui (7, 7') s'étendant jusqu'à la périphérie de la partie inférieure (8, 8', 8") de la balance forment, conjointement avec la partie inférieure (8, 8', 8") en forme de disque de la balance, une boîte plate fermée de manière hermétique.

10. Balance plate selon la revendication 1, caractérisée en ce que l'articulation de flexion externe (6) est appuyée sur le bord de la partie inférieure (8', 8") de la balance via un anneau d'appui (7') présentant une arête vive périphérique (17).

11. Balance plate selon la revendication 10, caractérisée en ce que l'arête vive périphérique (17) se situe approximativement sur le même diamètre que l'articulation de flexion externe (6).

12. Balance plate selon la revendication 10, caractérisée en ce que l'anneau d'appui (7') est étanché vis-à-vis de la partie inférieure (8', 8") de la balance au moyen d'au moins une bague d'étanchéité élastique (18, 19).

13. Balance plate selon l'une quelconque des revendications 1 à 12, caractérisée en ce que la partie inférieure (8") de la balance est constituée d'un anneau (21) formant le bord et d'une plaque centrale mince (22) qui est raccordée à la plaque de pesée (1) dans sa partie centrale.

## Claims

1. Flat scales, in particular wheel load scales for the wheels of road vehicles having a flat weighing plate (1) which absorbs the load, said weighing plate being supported along its edge by deformation elements fitted with wire strain gauges (5, 11), against a lower section of the scales, characterised in that the weighing plate (1) has the shape of a circular disc, that the weighing plate (1) is connected along its circumference to a concentric bending ring (3) by way of an intemal, circular flector (2), said bending ring being supported along the edge of the disc-shaped lower section of the scales (8, 8', 8") by way of an external circular flector (6), that at least two wire strain gauges (5 or 11) are fitted to the underside (4) of the bending ring (3) and to the underside of the weighing plate (1), in each case distributed around the circumference, and that the wire strain gauges (5, 11) are connected back to back in a full bridge circuit (12).

2. Flat scales, according to claim 1, characterised in that the wire strain gauge (11) is fitted to the underside of the weighing plate (1) close to the plane of the neutral axis (9).

3. Flat scales, according to claim 2, characterised in that the weighing plate (1) has, along its circumference, an annular surface (10) facing downwards and lying close to the plane of the neutral axis (9), said annular surface supporting one wire strain gauge (11).

4. Flat scales, according to claim 1, characterised in that the weighing plate (1) has, along its circumference, an annular surface (10') facing downwards and situated at the same level as the lower side (4) of the bending ring (3), said annular surface supporting one wire strain gauge (11).

5. Flat scales, according to claim 1, characterised in that the wire strain gauges (5, 11) comprise strain gauge wires wound spirally around the entire circumference.

6. Flat scales, according to claim 1, characterised in that the inner flector (2) rests on the top side of the weighing plate (1).

7. Flat scales according to claim 1, characterised in that the outer flector (6) is situated at a distance above the lower side (4) of the bending ring (3), said lower side supporting the wire strain gauge (5).

8. Flat scales according to claim 1, characterised in that the weighing plate (1), the inner flector (2), the bending ring (3), the outer flector (6) and a bearing ring (7, 7') extending to the circumference of the lower section of the scales (8, 8', 8") are designed as one piece.

9. Flat scales according to claim 1, characterised in that the weighing plate (1), the inner flector (2), the bending ring (3), the outer flector (6) and a bearing ring (7, 7') extending to the circumference of the lower section of the scales (5, 8', 8") together with the disc-shaped lower section of the scales (8, 8', 8") form a hermetically sealed, flat cell.

10. Flat scales according to claim 1, characterised in that the outer flector (6) is supported by the edge of the lower section of the scales (8', 8") by way of a bearing ring (7') having a circumferential knife-edge (17).

11. Flat scales according to claim 10, characterised in that the circumferential knife-edge (17) rests approximately on the same diameter as the outer flector (6).

12. Flat scales according to claim 10, characterised in that the bearing ring (7') is sealed against the lower section of the scales (8', 8") by at least one flexible sealing ring (18, 19).

13. Flat scales according to any of the claims 1 to 12, characterised in that the lower section of the scales (8") comprises a ring (21) forming the edge and a thin-walled middle plate (22), which is connected at its mid point, to the weighing plate (1).
